# EUROPEAN PATENT APPLICATION

(11) **EP 4 807 297 A1**
(43) Date of publication of application: **16.09.2026**
(21) Application number: 24915474.1
(22) Date of filing: 30.10.2024
(51) Int. Cl.: F25D 19/04, F25D 15/00, F25D 17/06, F25D 17/08, F25B 21/02, B01D 53/86, F25D 17/04

(54) **REFRIGERATOR**

(30) Priority: 05.01.2024 KR 20240002511; 07.03.2024 KR 20240032871
(71) Applicant: Samsung Electronics Co., Ltd., Suwon-si, Gyeonggi-do 16677 (KR)
(72) Inventor: HAN, Hyoju, Suwon-si Gyeonggi-do 16677 (KR); KO, Sungbok, Suwon-si Gyeonggi-do 16677 (KR); SEO, Bomin, Suwon-si Gyeonggi-do 16677 (KR); SONG, Joohee, Suwon-si Gyeonggi-do 16677 (KR); YANG, Byungkwan, Suwon-si Gyeonggi-do 16677 (KR); YUN, Sejin, Suwon-si Gyeonggi-do 16677 (KR); CHA, Sangyoul, Suwon-si Gyeonggi-do 16677 (KR)
(74) Representative: Gulde & Partner
(86) International application number: PCT/KR2024/096431
(87) International publication number: WO 2025/147064

(57) **Abstract**

This refrigerator comprises: a main body having a storage chamber provided therein; a thermoelectric element which is provided on the upper wall of the main body and includes a heating portion and a cooling portion; a cooling sink coming into contact with the cooling portion; a cooling fan which is provided to suck in air from the storage chamber and blows the air toward the cooling sink; a cooling duct which is provided to guide the air flowing due to the cooling fan; and an air purifier provided in the cooling duct and arranged between the cooling sink and the cooling fan.

## Description

### [Technical Field]

The disclosure relates to a refrigerator having an improved structure.

### [Background Art]

A refrigerator is a home appliance that includes a main body having a storage compartment and a cooling device configured to supply cold air to the storage compartment, thereby keeping food stored in the storage compartment fresh.

The cooling device may include a cooling sink configured to cool air, a cooling fan configured to blow air toward the cooling sink, and a cooling duct configured to guide air toward the cooling sink.

Due to the food stored in the storage compartment, unpleasant odors may emanate from the air inside the compartment, and in some cases, the air itself may become contaminated. The refrigerator may additionally include a configuration for removing odors from the internal air or sterilizing the air.

### [Disclosure]

### [Technical Problem]

One aspect of the present disclosure provides a refrigerator having an internal deodorization function.

One aspect of the present disclosure provides a refrigerator having a function of sterilizing internal air.

One aspect of the present disclosure provides a refrigerator having an internal deodorization function or an internal air sterilization function while also having a relatively large storage compartment volume.

The technical objectives of the present disclosure are not limited to the above, and other objectives that are not described above will be clearly understood by those skilled in the art from the above detailed description.

### [Technical Solution]

A refrigerator according to one aspect of the disclosure includes a main body having a storage compartment formed therein, a thermoelectric element provided on an upper wall of the main body and including a heat-generating portion and a cooling portion, a cooling sink in contact with the cooling portion, a cooling fan configured to draw in air inside the storage compartment and blow the air toward the cooling sink, a cooling duct configured to guide air flowing by the cooling fan, and an air purifying portion provided inside the cooling duct and disposed between the cooling sink and the cooling fan.

A refrigerator according to one aspect of the disclosure includes a main body having a storage compartment formed therein, a cooling sink provided inside the storage compartment, a cooling fan configured to blow air toward the cooling sink, a cooling duct configured to guide air flowing by the cooling fan, a deodorizing filter disposed between the cooling sink and the cooling fan, and an ion generator configured to ionize the air flowing by the cooling fan and disposed downstream of the deodorizing filter with respect to a flow direction of the air flowing by the cooling fan.

### [Description of Drawings]

FIG. 1 is a perspective view illustrating a refrigerator according to an embodiment.
FIG. 2 is a perspective view illustrating a state in which doors of the refrigerator according to an embodiment are opened.
FIG. 3 is a view illustrating an upper portion of a storage compartment of the refrigerator according to an embodiment, as viewed from below.
FIG. 4 is a schematic side cross-sectional view of the refrigerator according to an embodiment.
FIG. 5 is a cross-sectional view taken along line I-I of FIG. 2 .
FIG. 6 is a view illustrating a cooling duct cover and a cooling duct body according to an embodiment, separated from an upper wall of a main body.
FIG. 7 is an exploded perspective view illustrating a cooling duct body and a cooling duct cover according to an embodiment.
FIG. 8 is an exploded perspective view illustrating a cooling duct body and a cooling duct cover according to an embodiment.
FIG. 9 is a perspective view illustrating a bottom surface of a cooling duct body according to an embodiment.
FIG. 10 is a perspective view illustrating the cooling duct body of FIG. 9 with some components disassembled.
FIG. 11 is a plan view illustrating a bottom surface of a cooling duct body according to an embodiment.
FIG. 12 is a plan view illustrating a bottom surface of a cooling duct body according to an embodiment.
FIG. 13 is a plan view illustrating a bottom surface of a cooling duct body according to an embodiment.
FIG. 14 is a plan view illustrating a bottom surface of a cooling duct body according to an embodiment.
FIG. 15 is a plan view illustrating a bottom surface of a cooling duct body according to an embodiment.

### [Modes of the Disclosure]

Various embodiments of the disclosure and terms used herein are not intended to limit the technical features described herein to specific embodiments, and should be understood to include various modifications, equivalents, or substitutions of the corresponding embodiments.

In describing of the drawings, similar reference numerals may be used for similar or related elements.

The singular form of a noun corresponding to an item may include one or more of the items unless clearly indicated otherwise in a related context.

In the disclosure, phrases, such as "A or B", "at least one of A and B", "at least one of A or B", "A, B or C", "at least one of A, B and C", and "at least one of A, B, or C" may include any one or all possible combinations of the items listed together in the corresponding phrase among the phrases.

As used herein, the term "and/or" includes any and all combinations of one or more of the associated listed items.

Terms such as "1st", "2nd", "primary", or "secondary" may be used simply to distinguish an element from other elements, without limiting the element in other aspects (e.g., importance or order).

Further, as used in the disclosure, the terms "front", "rear", "top", "bottom", "side", "left", "right", "upper", "lower", and the like are defined with reference to the drawings, and are not intended to limit the shape and position of any element.

It will be understood that when the terms "includes", "comprises", "including", and/or "comprising" are used in the disclosure, they specify the presence of the specified features, figures, steps, operations, components, members, or combinations thereof, but do not preclude the presence or addition of one or more other features, figures, steps, operations, components, members, or combinations thereof.

When a given element is referred to as being "connected to", "coupled to", "supported by" or "in contact with" another element, it is to be understood that it may be directly or indirectly connected to, coupled to, supported by, or in contact with the other element. When a given element is indirectly connected to, coupled to, supported by, or in contact with another element, it is to be understood that it may be connected to, coupled to, supported by, or in contact with the other element through a third element.

It will also be understood that when an element is referred to as being "on" another element, it may be directly on the other element or intervening elements may also be present.

A refrigerator according to an embodiment of the disclosure may include a main body.

The "main body" may include an inner case, an outer case positioned outside the inner case, and an insulation provided between the inner case and the outer case.

The "inner case" may include a case, a plate, a panel, or a liner forming a storage compartment (also referred to as a storage room). The inner case may be formed as one body, or may be formed by assembling a plurality of plates together. The "outer case" may form an appearance of the main body, and be coupled to an outer side of the inner case such that the insulation is positioned between the inner case and the outer case.

The "insulation" may insulate an inside of the storage compartment from an outside of the storage compartment to maintain inside temperature of the storage compartment at appropriate temperature without being influenced by an external environment of the storage compartment. According to an embodiment of the disclosure, the insulation may include a foaming insulation. The foaming insulation may be molded by injecting and foaming urethane foam as a mixture of polyurethane and a foaming agent between the inner case and the outer case.

According to an embodiment of the disclosure, the insulation may include a vacuum insulation in addition to a foaming insulation, or may be configured only with a vacuum insulation instead of a foaming insulation. The vacuum insulation may include a core material and a cladding material accommodating the core material and sealing the inside with vacuum or pressure close to vacuum. However, the insulation is not limited to the above-mentioned foaming insulation or vacuum insulation, and may include various materials capable of being used for insulation.

The "storage compartment" may include a space defined by the inner case. The storage compartment may further include the inner case defining the space corresponding to the storage compartment. The storage compartment may store a variety of items, such as food, medicines, cosmetics, and the like, and the storage compartment may be configured to be open on at least one side for insertion and removal of the items.

The refrigerator may include one or more storage compartments. In a case in which two or more storage compartments are formed in the refrigerator, the respective storage compartments may have different purposes of use, and may be maintained at different temperatures. To this end, the respective storage compartments may be partitioned by a partition wall including an insulation.

The storage compartment may be maintained within an appropriate temperature range according to a purpose of use, and may include a "refrigerating compartment", a "freezing compartment", and a "temperature conversion compartment" according to purposes of use and/or temperature ranges. The refrigerating compartment may be maintained at an appropriate temperature to keep food refrigerating, and the freezing compartment may be maintained at an appropriate temperature to keep food frozen. The "refrigerating" may be keeping food cold without freezing the food, and for example, the refrigerating compartment may be maintained within a range of 0 degrees Celsius to 7 degrees Celsius. The "freezing" may be freezing food or keeping food frozen, and for example, the freezing compartment may be maintained within a range of -20 degrees Celsius to -1 degrees Celsius. The temperature conversion compartment may be used as either a refrigerating compartment or a freezing compartment according to or regardless of a user's selection.

The storage compartment may also be referred to by various terms, such as "vegetable compartment", "freshness compartment", "cooling compartment", and "ice-making compartment", in addition to "refrigerating compartment", "freezing compartment", and "temperature conversion compartment", and the terms, such as "refrigerating compartment", "freezing compartment", "temperature conversion compartment", etc., as used below are to be understood as representing storage compartments having the corresponding purposes of use and the corresponding temperature ranges.

The refrigerator according to an embodiment of the disclosure may include at least one door configured to open or close the open side of the storage compartment. The respective doors may be provided to open or close one or more storage compartments, or a single door may be provided to open or close a plurality of storage compartments. The door may be rotatably or slidably mounted to the front of the main body.

The "door" may seal the storage compartment in a closed state. The door, like the main body, may include an insulation to insulate the storage compartment in a closed state.

According to an embodiment, the door may include an outer door plate forming the front surface of the door, an inner door plate forming the rear surface of the door and facing the storage compartment, an upper cap, a lower cap, and a door insulation provided therein.

A gasket may be provided on the edge of the inner door plate to seal the storage compartment by coming into close contact with the front surface of the main body when the door is closed. The inner door plate may include a dyke that protrudes rearward to allow a door basket for storing items to be fitted.

According to an embodiment, the door may include a door body and a front panel that is detachably coupled to the front of the door body and forming the front surface of the door. The door body may include an outer door plate forming the front surface of the door body, an inner door plate forming the rear surface of the door body and facing the storage compartment, an upper cap, a lower cap, and a door insulation provided therein.

The refrigerator may be classified as French Door Type, Side-by-side Type, Bottom Mounted Freezer (BMF), Top Mounted Freezer (TMF), or Single Door Refrigerator according to the arrangement of the doors and the storage compartments.

The refrigerator according to an embodiment of the disclosure may include a cold air supply device for supplying cold air to the storage compartment.

The "cold air supply device" may include a machine, an apparatus, an electronic device, and/or a combination system thereof, capable of generating cold air and guiding the cold air to cool the storage compartment.

According to an embodiment of the disclosure, the cold air supply device may generate cold air through a cooling cycle including compression, condensation, expansion, and evaporation processes of refrigerants. To this end, the cold air supply device may include a refrigeration cycle device having a compressor, a condenser, an expander, and an evaporator to drive the refrigeration cycle. According to an embodiment of the disclosure, the cold air supply device may include a semiconductor, such as a thermoelectric element. The thermoelectric element may cool the storage compartment by heating and cooling actions through the Peltier effect.

The refrigerator according to an embodiment of the disclosure may include a machine compartment in which at least some components belonging to the cold air supply device are installed.

The "machine compartment" may be partitioned and insulated from the storage compartment to prevent heat generated by the components installed in the machine compartment from being transferred to the storage compartment. To dissipate heat from the components installed in the machine compartment, the machine compartment may communicate with outside of the main body.

The refrigerator according to an embodiment of the disclosure may include a dispenser provided on the door to provide water and/or ice. The dispenser may be provided on the door to allow access by the user without opening the door.

The refrigerator according to an embodiment of the disclosure may include an ice-making device that produces ice. The ice-making device may include an ice-making tray that stores water, an ice-moving device that separates ice from the ice-making tray, and an ice-bucket that stores ice produced in the ice-making tray.

The refrigerator according to an embodiment of the disclosure may include a controller for controlling the refrigerator.

The "controller" may include a memory for storing and/or recording data and/or programs for controlling the refrigerator, and a processor for outputting control signals for controlling the cold air supply device, etc. in accordance with the programs and/or data stored in the memory.

The memory may store or record various information, data, instructions, programs, and the like necessary for operation of the refrigerator. The memory may store temporary data generated while generating control signals for controlling components included in the refrigerator. The memory may include at least one of a volatile memory or a non-volatile memory, or a combination thereof.

The processor may control the overall operation of the refrigerator. The processor may control the components of the refrigerator by executing programs stored in memory. The processor may include a separate neural processing unit (NPU) that performs an artificial intelligence (AI) model operation. In addition, the processor may include a central processing unit (CPU), a graphics processor (GPU), and the like. The processor may generate a control signal to control the operation of the cold air supply device. For example, the processor may receive temperature information of the storage compartment from a temperature sensor and generate a cooling control signal to control an operation of the cold air supply device based on the temperature information of the storage compartment.

Furthermore, the processor may process a user input of a user interface and control an operation of the user interface in accordance with the programs and/or data memorized/stored in the memory. The user interface may be provided with an input interface and an output interface. The processor may receive the user input from the user interface. In addition, the processor may transmit a display control signal and image data for displaying an image on the user interface to the user interface in response to the user input.

The processor and memory may be provided integrally or may be provided separately. The processor may include one or more processors. For example, the processor may include a main processor and at least one sub-processor. The memory may include one or more memories.

The refrigerator according to an embodiment of the disclosure may include a processor and a memory for controlling all of the components included in the refrigerator, and may include a plurality of processors and a plurality of memories for individually controlling the components of the refrigerator. For example, the refrigerator may include a processor and a memory for controlling the operation of the cold air supply device in accordance with to an output of the temperature sensor. In addition, the refrigerator may be separately provided with a processor and a memory for controlling the operation of the user interface in accordance with the user input.

A communication module may communicate with external devices, such as servers, mobile devices, and other home appliances via a nearby access point (AP). The AP may connect a local area network (LAN) to which a refrigerator or a user device is connected to a wide area network (WAN) to which a server is connected. The refrigerator or the user device may be connected to the server via the WAN.

The input interface may include keys, a touch screen, a microphone, and the like. The input interface may receive the user input and pass the received user input to the processor.

The output interface may include a display, a speaker, and the like. The output interface may output various notifications, messages, information, and the like generated by the processor.

As used in the following description, the terms "front-to-back direction", "left-to-right direction", "upper side", "lower side", and the like are defined based on the drawings, and the shape and position of each configuration are not limited by these terms.

For example, an X direction may be defined as a front-to-back direction. For example, a Y direction may be defined as a lateral direction. For example, a Z direction may be defined as an up-and-down direction. For example, the +X direction may be defined as forward, and the -X direction may be defined as rearward. For example, the +Y direction may be defined as right, and the -Y direction may be defined as left. For example, the +Z direction may be defined as upward, and the -Z direction may be defined as downward.

Hereinafter, an embodiment according to the present disclosure will be described in detail with reference to the accompanying drawings.

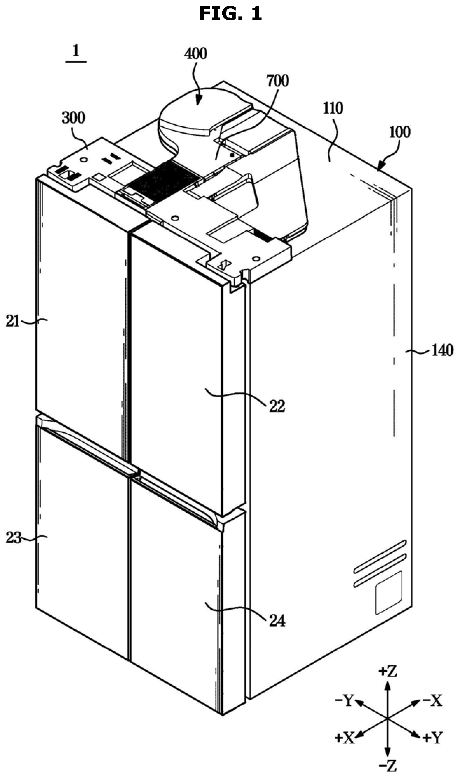

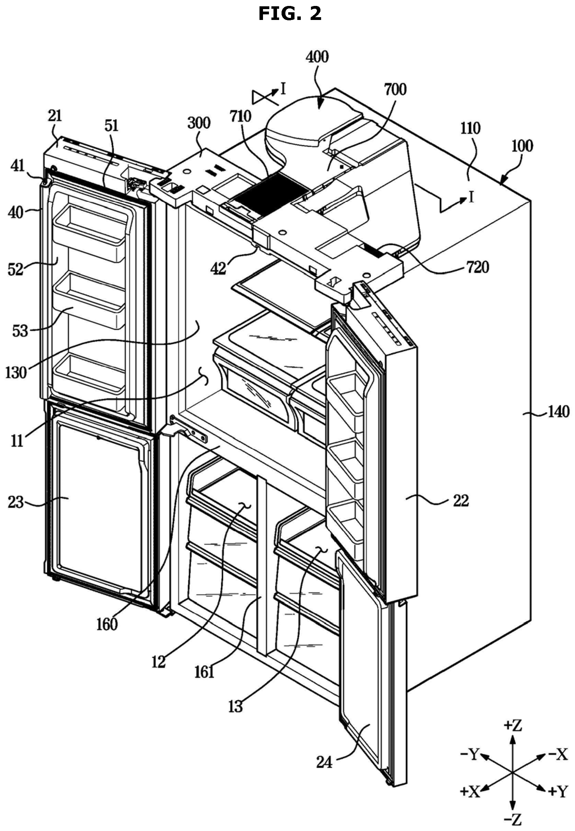

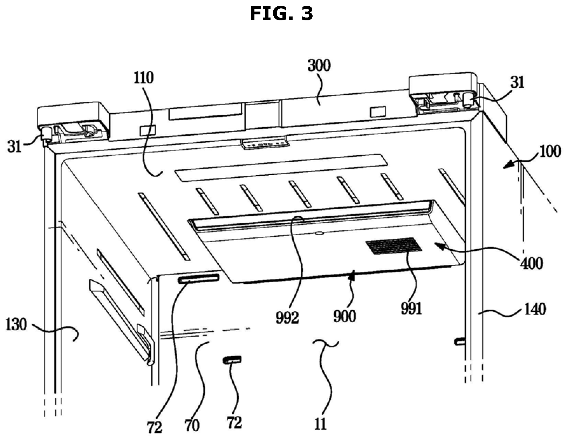

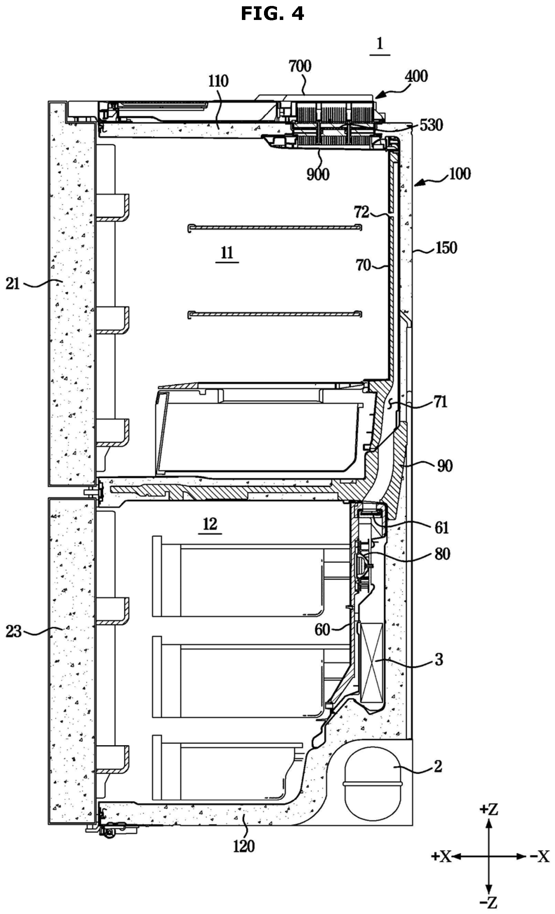

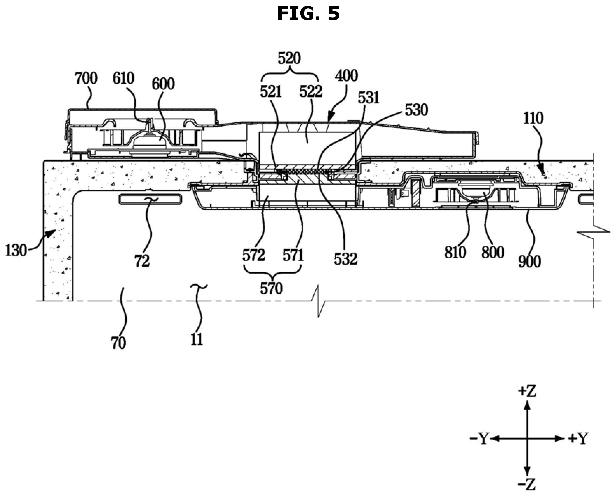

FIG. 1 is a perspective view illustrating a refrigerator according to an embodiment. FIG. 2 is a perspective view illustrating a state in which doors of the refrigerator according to an embodiment are opened. FIG. 3 is a view illustrating an upper portion of a storage compartment of the refrigerator according to an embodiment, as viewed from below. FIG. 4 is a schematic side cross-sectional view of the refrigerator according to an embodiment. FIG. 5 is a cross-sectional view taken along line I-I of FIG. 2.

Referring to FIGS. 1 to 5, a refrigerator 1 may include a main body 100, a plurality of storage compartments 11, 12 and 13 provided inside the main body 100, and a plurality of doors 21, 22, 23 and 24 provided to open or close the plurality of storage compartments 11, 12 and 13.

The main body 100 may include an upper wall 110, a lower wall 120, a left wall 130, a right wall 140, and a rear wall 150. The upper wall 110, the lower wall 120, the left wall 130, the right wall 140, and the rear wall 150 may form an upper surface (+Z direction), a lower surface (-Z direction), a left surface (-Y direction), a right surface (+Y direction), and a rear wall (-X direction) of the main body 100, respectively.

Each of the plurality of storage compartments 11, 12 and 13 may accommodate items. Each of the plurality of storage compartments 11, 12 and 13 may be formed to be open at a front side to allow items to be put in or taken out.

The plurality of storage compartments 11, 12 and 13 may include a first storage compartment 11, a second storage compartment 12, and a third storage compartment 13. The first storage compartment 11 may be provided in an upper portion of the main body 100, and the second storage compartment 12 and the third storage compartment 13 may be provided in a lower portion of the main body 100. The first storage compartment 11 may be a refrigerating compartment, the second storage compartment 12 may be a freezing compartment, and the third storage compartment 13 may be a variable temperature compartment. The main body 100 may include a horizontal partition wall 160 that partitions the first storage compartment 11 from the second storage compartment 12 and the third storage compartment 13, and a vertical partition wall 161 that partitions the second storage compartment 12 from the third storage compartment 13.

Each of the plurality of doors 21, 22, 23 and 24 may be provided to open or close corresponding to each of the plurality of storage compartments 11, 12 and 13.

The plurality of doors 21, 22, 23 and 24 may include a first door 21, a second door 22, a third door 23, and a fourth door 24. The first door 21 and the second door 22 may open or close the first storage compartment 11, the third door 23 may open or close the second storage compartment 12, and the fourth door 24 may open or close the third storage compartment 13.

Each of the plurality of doors 21, 22, 23 and 24 may be rotatably coupled to the main body 100. Specifically, each of the plurality of doors 21, 22, 23 and 24 may be rotatably coupled to the main body 100 by a hinge.

For example, the first door 21 and the second door 22 may each be rotatably coupled to the main body 100 by a hinge 31 provided at an upper portion of the main body 100 and a hinge (not shown) provided at a middle of the main body 100. The hinge 31 may be covered by a top cover 200 provided to cover a front portion of an upper surface of the main body 100.

The refrigerator 1 may include a rotating bar 40. The rotating bar 40 may be configured to cover a gap formed between the first door 21 and the second door 22 when the first door 21 and the second door 22 are closed. The rotating bar 40 may have a rod shape elongated in the up-and-down direction (Z-axis direction). The rotating bar 40 may also be referred to as a pillar, a mullion, or the like.

The rotating bar 40 may be rotatably provided on one of the first door 21 and the second door 22. While the rotating bar 40 is shown in the drawings as being rotatably provided on the first door 21, the rotating bar 40 may also be rotatably provided on the second door 22.

The rotating bar 40 may include a guide protrusion 41 provided on an upper end of the rotating bar 40. A rotation guide 42 for guiding rotation of the guide protrusion 41 may be provided on the upper portion of the main body 100. When the first door 21 and the second door 22 are closed, the rotation guide 42 may guide the rotation of the guide protrusion 41, thereby allowing the rotating bar 40 to rotate. This may allow the gap formed between the first door 21 and the second door 22 to be covered.

Each of the plurality of doors 21, 22, 23 and 24 may include a gasket 51. The gasket 51 may be in close contact with a front surface of the main body 100 when each of the plurality of doors 21, 22, 23 and 24 is closed.

Each of the plurality of doors 21, 22, 23 and 24 may include a dyke 52 protruding rearwardly. The dyke 52 may be equipped with a door shelf 53 for storing items. The rotating bar 40 may be rotatably mounted on the dyke 52.

Although the number and arrangement of the storage compartments and the number and arrangement of the doors have been described above, there is no limitation on the number and arrangement of the storage compartments and the number and arrangement of the doors of the refrigerator according to an embodiment of the present disclosure.

The refrigerator 1 may include a thermoelectric cooling device 400 provided to cool the first storage compartment 11.

The thermoelectric cooling device 400 may be provided on an upper side of the first storage compartment 11 to cool the first storage compartment 11. In other words, the thermoelectric cooling device 400 may be arranged on the upper wall 110 of the main body 100.

The thermoelectric cooling device 400 may include a thermoelectric element 530. The thermoelectric element 530 may be a semiconductor element that utilizes thermoelectric effects to convert thermal energy into electrical energy, and may also be referred to as a thermoelectric semiconductor element, a Peltier element, or the like. The thermoelectric element 530 may have a thin hexahedral shape.

The thermoelectric element 530 may include a heat generating portion 531 and a cooling portion 532. When a current is applied to the thermoelectric element 530, a heat generating action may occur at the heat generating portion 531 and a heat absorbing action may occur at the cooling portion 532. The heat generating portion 531 may be provided on one side of the thermoelectric element 530, and the cooling portion 532 may be provided on the opposite side.

The thermoelectric element 530 may be provided on the upper wall 110. The thermoelectric element 530 may be arranged such that the heat generating portion 531 faces upward of the thermoelectric element 530 and the cooling portion 532 faces downward of the thermoelectric element 530. The heat generating portion 531 may face an outside of the main body 100, and the cooling portion 532 may face an inside of the first storage compartment 11. Thus, air warmed by heat exchange with the heat generating portion 531 may be discharged to the outside of the main body 100, and air cooled by heat exchange with the cooling portion 532 may be supplied to the first storage compartment 11.

The thermoelectric cooling device 400 may include a heat sink 520 in contact with the heat generating portion 531 to allow efficient heat exchange between the heat generating portion 531 and air from outside the main body 100.

The heat sink 520 may be provided on the outside of the main body 100. The heat sink 520 may contact the heat generating portion 531 to absorb heat from the heat generating portion 531 and dissipate heat to the outside of the main body 100. The heat sink 520 may also be referred to as a hot sink, a heat dissipation heat sink, a hot heat sink, or the like.

The heat sink 520 may be formed of a metal material having good thermal conductivity. For example, the heat sink 520 may be formed of aluminum or copper.

The heat sink 520 may include a heat sink base 521 that contacts the heat generating portion 531, and a plurality of heat sink fins 522 that protrude from the heat sink base 521 to increase a heat transfer area. The plurality of heat sink fins 522 may protrude upwardly from the heat sink base 521.

The thermoelectric cooling device 400 may include a cooling sink 570 in contact with the cooling portion 532 to allow efficient heat exchange between the cooling portion 532 and air from inside the first storage compartment 11.

The cooling sink 570 may be provided inside the first storage compartment 11. The cooling sink 570 may cool the first storage compartment 11 by taking heat from the first storage compartment 11 and transferring the heat to the cooling portion 532. The cooling sink 570 may also be referred to as a cold sink, a chilling sink, a cooling heat sink, a cold heat sink, a chilling heat sink, or the like.

The cooling sink 570 may be formed of a metal material having good thermal conductivity. For example, the cooling sink 570 may be formed of aluminum or copper.

The cooling sink 570 may include a cooling sink base 571 that contacts the cooling portion 532, and a plurality of cooling fins 571 that protrude from the cooling sink base 571 to increase the heat transfer area. The plurality of cooling fins 572 may protrude downwardly from the cooling sink base 571. The cooling sink base 571 and the plurality of cooling fins 572 may be integrally formed.

The thermoelectric cooling device 400 may include a heat dissipation fan 600 that flows air to allow efficient heat exchange between the heat sink 520 and air from outside the main body 100.

The heat dissipation fan 600 may be configured to draw in air from outside the main body 100 and blow the air toward the heat sink 520. The heat dissipation fan 600 may be arranged to be positioned in a horizontal direction of the heat sink 520. The heat dissipation fan 600 may be arranged on an outer side of the main body 100. The heat dissipation fan 600 may be arranged on an upper side of the upper wall 110.

The heat dissipation fan 600 may be a centrifugal fan that draws in air in an axial direction and discharges the drawn-in air in a radial direction. The centrifugal fan may include a blower fan. A rotational shaft 610 of the heat dissipation fan 600 may be disposed perpendicular to an upper surface of the upper wall 110.

The thermoelectric cooling device 400 may include a heat dissipation duct 700 configured to guide air flowing by the heat dissipation fan 600. The heat dissipation duct 700 may draw in air from outside the main body 100 and guide the drawn-in air to heat exchange with the heat sink 520, and may discharge the air that has exchanged heat with the heat sink 520 back to the outside of the main body 100.

The heat dissipation duct 700 may draw in air from an external space on an upper side of the main body 100. The heat dissipation duct 700 may discharge the air that has exchanged heat with the heat sink 520 to the external space on the upper side of the main body 100. The heat dissipation fan 600 may be located inside the heat dissipation duct 700. The heat sink 520 may be located inside the heat dissipation duct 700. The heat dissipation duct 700 may be provided on the upper surface of the upper wall 110.

The heat dissipation duct 700 may include an outside air inlet 710 that draws in air from outside the main body 100 into an interior of the heat dissipation duct 700, and an outside air outlet 720 that discharges air that has exchanged heat with the heat sink 520 to the outside of the main body 100.

The thermoelectric cooling device 400 may include a cooling fan 800 that flows air to allow efficient heat exchange between the cooling sink 570 and air inside the first storage compartment 11.

The cooling fan 800 may be configured to draw in air within the first storage compartment 11 and blow the air toward the cooling sink 570. The cooling fan 800 may be positioned in a horizontal direction of the cooling sink 570. The cooling fan 800 may be provided inside the first storage compartment 11. The cooling fan 800 may be provided on a lower side of the upper wall 110.

The cooling fan 800 may be a centrifugal fan that draws in air in an axial direction and discharges the drawn-in air in a radial direction. A rotational shaft 810 of the cooling fan 800 may be disposed perpendicular to a lower surface of the upper wall 110.

The thermoelectric cooling device 400 may include a cooling duct 900 configured to guide air flowing by the cooling fan 800. The cooling duct 900 may draw in air from inside the first storage compartment 11 and guide the drawn-in air to heat exchange with the cooling sink 570, and may discharge the air that has exchanged heat with the cooling sink 570 back into the interior of the first storage compartment 11.

The cooling duct 900 may be located on the upper side of the first storage compartment 11. Specifically, the cooling duct 900 may be provided on the lower surface of the upper wall 110.

The cooling fan 800 may be located inside the cooling duct 900. The cooling sink 570 may be located inside the cooling duct 900. The cooling duct 900 may be provided on a lower surface of the upper wall 110.

The cooling duct 900 may include an inside air inlet 991 configured to draw in air within the first storage compartment 11 into the interior of the cooling duct 900, and an inside air outlet 992 configured to discharge the air that has exchanged heat with the cooling sink 570 into the interior of the first storage compartment 11.

Referring to FIG. 4, the refrigerator 1 may include a refrigeration cycle device to cool the storage compartments through a refrigeration cycle. The refrigeration cycle device may include a compressor 2, a condenser (not shown), an expansion device (not shown), and an evaporator 3. The evaporator 3 may be arranged at a rear side of the second storage compartment 12 and the third storage compartment 13.

The refrigerator 1 may include evaporator ducts 60 and 70 that guide cold air generated in the evaporator 3. The evaporator ducts 60 and 70 may include a first evaporator duct 60 and a second evaporator duct 70. The first evaporator duct 60 may be arranged at a rear side of the second storage compartment 12 and the third storage compartment 13. The second evaporator duct 70 may be arranged at a rear side of the first storage compartment 11.

The cold air generated in the evaporator 3 may be drawn into the interior of the first evaporator duct 60 by an evaporator fan 80. The cold air drawn into the interior of the first evaporator duct 60 may be discharged to the second storage compartment 12 or the third storage compartment 13 through a cold air outlet (not shown) formed at a front face thereof. Furthermore, the cold air drawn into the interior of the first evaporator duct 60 may be directed to an inner flow path 71 of the second evaporator duct 70. The first evaporator duct 60 may be provided with a damper 61 that controls the supply of the cold air inside the first evaporator duct 60 to the second evaporator duct 70. A connection duct 90 may be provided between the first evaporator duct 60 and the second evaporator duct 70 to communicate between the first evaporator duct 60 and the second evaporator duct 70.

Cold air introduced into the inner flow path 71 of the second evaporator duct 70 may be supplied to the first storage compartment 11 through a cold air outlet 72 formed at a front face of the second evaporator duct 70.

However, unlike the above embodiment, cold air generated by the evaporator 3 may be supplied directly to the second evaporator duct 70 without passing through the first evaporator duct 60. Alternatively, a separate evaporator 3 may be provided at a rear side of the first storage compartment 11 to supply cold air to the second evaporator duct 70.

As described above, the refrigerator 1 according to an embodiment of the present disclosure includes a thermoelectric cooling device and a refrigeration cycle device for cooling the first storage compartment 11. Accordingly, a method of supplying cold air to the first storage compartment 11 may include: a first method of supplying only cold air generated by the thermoelectric cooling device 400; a second method of supplying only cold air generated by the refrigeration cycle device; and a third method of supplying both cold air generated by the thermoelectric cooling device and cold air generated by the refrigeration cycle device.

The refrigerator 1 may supply cold air to the first storage compartment 11 using an appropriate method depending on external conditions and internal conditions. For example, the refrigerator 1 may cool the first storage compartment 11 using one of the methods depending on an indoor temperature at which the refrigerator 1 is installed. That is, when the indoor temperature is higher than a predetermined temperature and cooling by the refrigeration cycle is more efficient than cooling by the thermoelectric cooling device, the first storage compartment 11 may be cooled using only cold air generated by the refrigeration cycle device. Conversely, when the indoor temperature is lower than the predetermined temperature and cooling by the thermoelectric cooling device is more efficient than cooling by the refrigeration cycle device, the first storage compartment 11 may be cooled using only cold air generated by the thermoelectric cooling device. The refrigerator 1 may operate only the thermoelectric cooling device when it is required to reduce noise. When it is required to rapidly cool the first storage compartment 11, the refrigerator 1 may simultaneously supply cold air generated by the thermoelectric cooling device and cold air generated by the refrigeration cycle device to the first storage compartment 11.

As described above, according to an embodiment of the present disclosure, the refrigerator may include both a thermoelectric cooling device and a refrigeration cycle device, but the disclosure is not limited thereto, and the refrigerator may include only the thermoelectric cooling device 400.

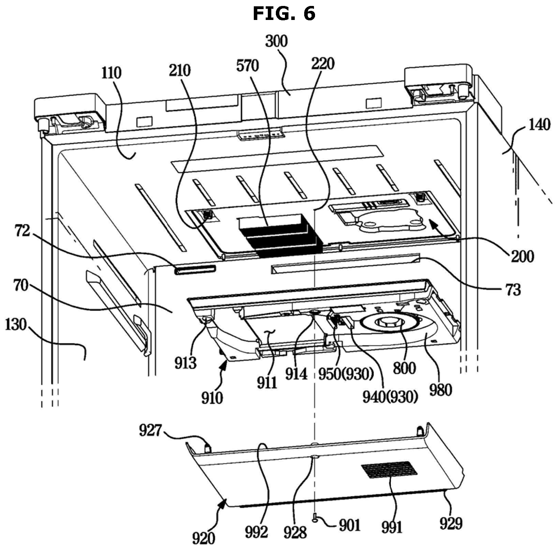

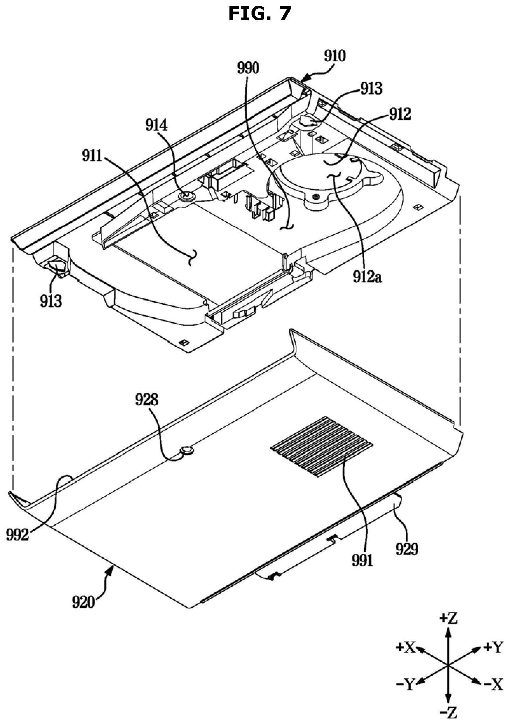

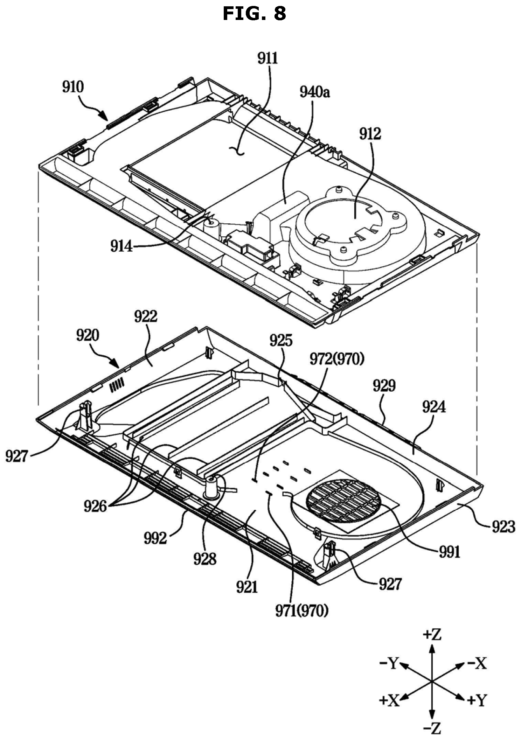

FIG. 6 is a view illustrating a cooling duct cover and a cooling duct body according to an embodiment, separated from an upper wall of a main body. FIG. 7 is an exploded perspective view illustrating a cooling duct body and a cooling duct cover according to an embodiment. FIG. 8 is an exploded perspective view illustrating a cooling duct body and a cooling duct cover according to an embodiment.

Referring to FIGS. 6 to 8, the cooling duct 900 may include a cooling duct body 910 and a cooling duct cover 920.

The cooling duct body 910 may be coupled to the upper wall 110 of the main body 100. Specifically, the cooling duct body 910 may be coupled to the upper wall 110 of the main body 100 by being seated in a cooling duct seating portion 200 provided on the upper wall 110 of the main body 100. The cooling duct cover 920 may be coupled to a lower portion of the cooling duct body 910. The cooling duct cover 920 may cover an open lower surface of the cooling duct body 910.

An elastic coupling protrusion 927 protruding upward may be formed on the cooling duct cover 920. A coupling protrusion through-hole 913 through which the elastic coupling protrusion 927 passes may be formed in the cooling duct body 910. An elastic protrusion coupling portion 210 may be provided on the bottom surface of the cooling duct seating portion 200. The elastic coupling protrusion 927 may pass through the coupling protrusion through-hole 913 and be coupled to the elastic protrusion coupling portion 210. The elastic coupling protrusion 927 may be elastically deformed while being inserted into the elastic protrusion coupling portion 210. When insertion of the elastic coupling protrusion 927 into the elastic protrusion coupling portion 210 is completed, the elastic coupling protrusion 927 may be restored to its original shape and the elastic coupling protrusion 927 and the elastic protrusion coupling portion 210 may be coupled to each other.

The cooling duct 900 may be coupled to the upper wall 110 of the main body 100 through a separate cooling duct coupling member 901. The cooling duct coupling member 901 may be a screw. A first coupling hole 928 to which the cooling duct coupling member 901 is coupled may be formed in the cooling duct cover 920. A second coupling hole 914 to which the cooling duct coupling member 901 is coupled may be formed in the cooling duct body 910. A third coupling hole 220 to which the cooling duct coupling member 901 is coupled may be formed in the cooling duct seating portion 200.

The cooling duct 900 may be coupled to an evaporator duct 70 provided at the rear of the first storage compartment 11. The cooling duct 900 may include a duct coupling protrusion 929 protruding rearward to be coupled to the evaporator duct 70. The duct coupling protrusion 929 may protrude from a rear portion 944 of the cooling duct cover 920. The evaporator duct 70 may include a duct coupling hole 73 into which the duct coupling protrusion 929 is inserted.

With such a configuration, the cooling duct 900 may be coupled to the upper wall 110 by inserting the duct coupling protrusion 929 of the cooling duct 900 into the duct coupling hole 73 of the evaporator duct 70, coupling the elastic coupling protrusion 927 of the cooling duct 900 to the elastic protrusion coupling portion 210, and coupling the cooling duct coupling member 901 through the cooling duct 900 to the third coupling hole 220. Therefore, assembly and disassembly of the cooling duct 900 to and from the upper wall 110 of the main body 100 may be facilitated, and the cooling duct 900 may be firmly fixed.

The cooling duct 900 may include a cooling space 990. The cooling space 990 may be formed inside the cooling duct 900. Specifically, the cooling duct body 910 includes a body base 910a provided on a bottom surface of the cooling duct body 910 and a recessed portion 910b formed by being recessed from a lower surface of the cooling duct body 910 to form a step relative to the body base 910a, and the cooling space 990 may be formed by the recessed portion 910b of the cooling duct body 910 and the cooling duct cover 920. The cooling fan 800 may be disposed in the cooling space 990. The cooling sink 570 may be disposed in the cooling space 990.

The cooling duct body 910 may include a sink passage hole 911 through which the cooling sink 570 passes. The cooling sink 570 may pass through the sink passage hole 911 and be disposed in the cooling space 990.

The cooling duct body 910 may include a fan installation portion 912 protruding upward. A fan accommodation space 912a in which the cooling fan 800 is accommodated may be formed on a bottom surface of the fan installation portion 912.

The cooling fan 800 may be installed on the bottom surface of the fan installation portion 912. The rotation axis 810 of the cooling fan 800 may be perpendicular to the bottom surface of the fan installation portion 912. The cooling sink 570 may be located in one radial direction of the cooling fan 800. With such a structure, the length of the cooling duct 900 in the up-down direction (Z-axis direction) may be made compact.

The cooling duct cover 920 may include a bottom 921, side portions 922 and 923 extending upward from both lateral edges (Y-axis direction) of the bottom 921, and a rear portion 924 extending upward from a rear edge (-X direction) of the bottom 921.

An inside air inlet 991 may be formed in the bottom 921 of the cooling duct cover 920. Specifically, the inside air inlet 991 may be formed below the cooling fan 800.

An inside air outlet 992 may be formed at a front end of the cooling duct 900. Specifically, the inside air outlet 992 may be formed between a front portion of the cooling duct body 910 and a front portion of the cooling duct cover 920. The inside air outlet 992 may extend along the left-right length direction (Y-axis direction) of the cooling duct 900.

The cooling duct 900 may guide defrost water formed by the cooling sink 570 toward a rear side of the cooling duct 900. Defrost water formed by the melting of frost generated on the surface of the cooling sink 570 may fall from the cooling sink 570 onto the bottom 921 of the cooling duct cover 920.

The cooling duct 900 may include a drain port 925 to drain defrost water that has fallen onto the bottom 921 of the cooling duct cover 920 to the outside of the cooling duct 900. The drain port 925 may be formed in a rear portion 924 of the cooling duct cover 920. The drain port 925 may be formed at a lower end of the rear portion 924 so that defrost water flowing on the bottom 921 of the cooling duct cover 920 may be easily drained. That is, the drain port 925 may be formed so as not to be spaced apart from the bottom 921.

The bottom 921 of the cooling duct cover 920 may be formed to be inclined downward toward the drain port 925 to guide defrost water to the drain port 925.

The cooling duct cover 920 may include a plurality of defrost water guides 926 protruding from the bottom 921 of the cooling duct cover 920 to guide defrost water to the drain port 925. The plurality of defrost water guides 926 may be disposed spaced apart from each other.

Each of the plurality of defrost water guides 926 may be formed to extend in the front-rear direction (X-axis direction). In other words, each of the plurality of defrost water guides 926 may be formed to extend in a direction toward the drain port 925.

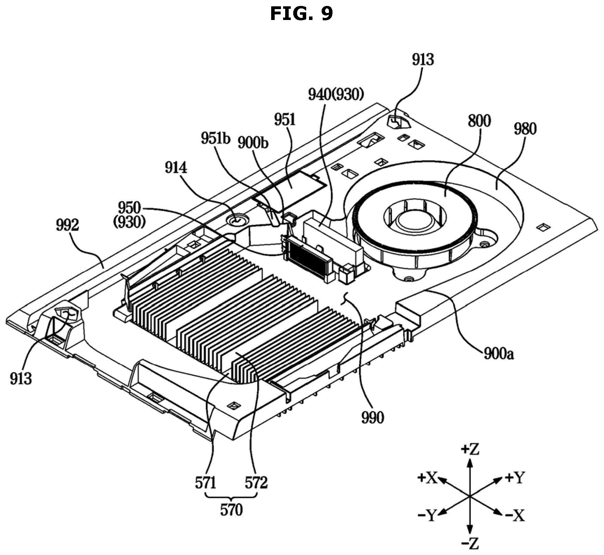

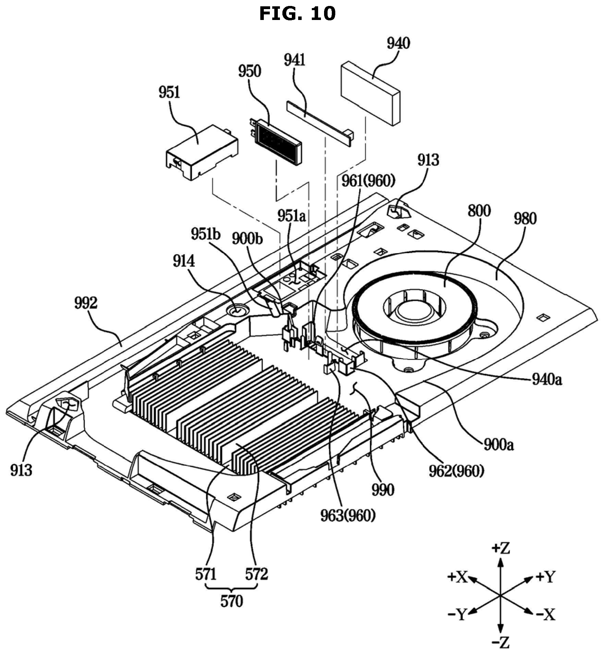

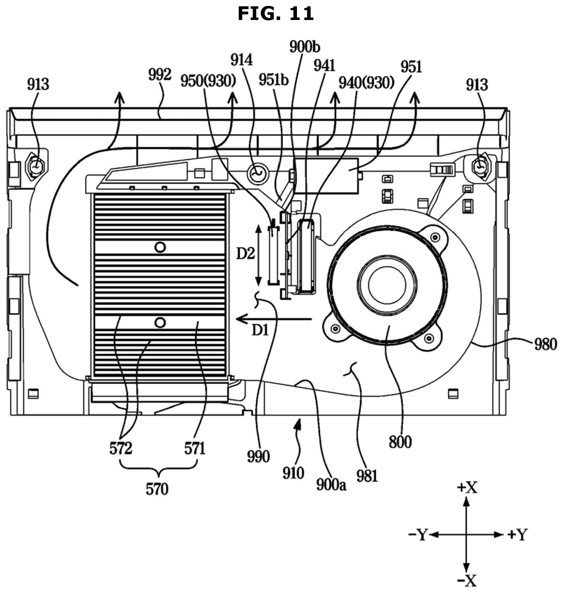

FIG. 9 is a perspective view illustrating a bottom surface of a cooling duct body according to an embodiment. FIG. 10 is a perspective view illustrating the cooling duct body of FIG. 9 with some components disassembled. FIG. 11 is a plan view illustrating a bottom surface of a cooling duct body according to an embodiment.

Referring to FIGS. 9 to 11, the refrigerator 1 may include an air purifying portion 930. The air purifying portion 930 may be provided inside the cooling duct 900. The air purifying portion 930 may be configured to purify air flowing inside the cooling duct 900. In other words, the air purifying portion 930 may be configured to purify air flowing by the cooling fan 800.

The air purifying portion 930 may be disposed in the cooling space 990. The air purifying portion 930 may be disposed between the cooling sink 570 and the cooling fan 800. Specifically, the cooling sink 570 may be disposed on one side of the cooling duct 900, the cooling fan 800 may be disposed on the other side of the cooling duct 900, and the air purifying portion 930 may be disposed between the cooling sink 570 and the cooling fan 800.

The air purifying portion 930 may include any configuration as long as it can purify air. For example, the air purifying portion 930 may be configured to filter air. For example, the air purifying portion 930 may be configured to sterilize air.

The air purifying portion 930 may include a deodorizing filter 940 configured to remove odors from the air. The deodorizing filter 940 may be disposed between the cooling sink 570 and the cooling fan 800. The deodorizing filter 940 may remove odors from the air flowing by the cooling fan 800.

The deodorizing filter 940 may include any configuration as long as it can remove odors from the air. For example, the deodorizing filter 940 may include a deodorizing agent configured to absorb odors from the air. For example, the deodorizing filter 940 may be a photocatalyst filter configured to remove odors from the air through a photochemical reaction. Hereinafter, an embodiment in which the deodorizing filter 940 is a photocatalyst filter will be described.

The deodorizing filter 940 may be a photocatalyst filter that removes odors from the air through a photochemical reaction. In other words, the deodorizing filter 940 may be a photocatalyst filter that induces a photochemical action of the air using a photocatalyst. The deodorizing filter 940 includes a photocatalyst and may induce a chemical reaction by light energy of the photocatalyst to sterilize various pathogens and bacteria present in the air. For example, the deodorizing filter 940 may remove harmful substances such as hydrogen sulfide, ammonia, nitrogen oxides (NOX), sulfur oxides (SOX), and formaldehyde present in the air, and may decompose malodorous substances such as acetaldehyde, ammonia, and hydrogen sulfide.

As described above, since the deodorizing filter 940 is disposed between the cooling sink 570 and the cooling fan 800, the deodorizing filter 940 may remove odors from the air flowing by the cooling fan 800 through a photochemical reaction.

The cooling duct 900 may include a deodorizing filter accommodating portion 940a that accommodates at least a part of the deodorizing filter 940. For example, the deodorizing filter accommodating portion 940a may accommodate an upper portion of the deodorizing filter 940. The deodorizing filter accommodating portion 940a may be formed to protrude from an upper surface of the cooling duct body 910.

The refrigerator 1 may include a light source 941. The light source 941 may be configured to irradiate light onto the deodorizing filter 940. For example, the light source 941 may include a light emitting diode (LED). The light source 941 may be omitted when the deodorizing filter 940 is not a photocatalyst filter.

The light source 941 may be disposed downstream of the deodorizing filter 940 with respect to a flow direction D1 of the air flowing by the cooling fan 800. In other words, the deodorizing filter 940 may be disposed closer to the cooling fan 800 than to the cooling sink 570, and the light source 941 may be disposed closer to the cooling sink 570 than to the cooling fan 800. However, the disclosure is not limited thereto, and the light source 941 may be disposed upstream of the deodorizing filter 940 with respect to the flow direction D1 of the air flowing by the cooling fan 800.

The light source 941 may be disposed adjacent to the deodorizing filter 940. The light source 941 may face one surface of the deodorizing filter 940 to irradiate light onto the surface of the deodorizing filter 940.

The air purifying portion 930 may include an ion generator 950 configured to ionize air. The ion generator 950 may sterilize air by ionizing the air. For example, the ion generator 950 may be a negative ion electrode that generates negative ions.

The ion generator 950 may be disposed between the cooling sink 570 and the cooling fan 800. The ion generator 950 may ionize air flowing by the cooling fan 800 to sterilize the air.

The ion generator 950 may be disposed downstream of the deodorizing filter 940 with respect to the flow direction D1 of the air flowing by the cooling fan 800. In addition, the ion generator 950 may be disposed downstream of the light source 941 with respect to the flow direction D1 of the air flowing by the cooling fan 800. That is, the light source 941 may be disposed between the deodorizing filter 940 and the ion generator 950. In other words, the deodorizing filter 940, the light source 941, and the ion generator 950 may be sequentially arranged along the flow direction D1 of the air flowing by the cooling fan 800.

The arrangement relationship among the deodorizing filter 940, the light source 941, and the ion generator 950 is not limited to the above embodiment. Various embodiments related thereto will be described below.

The ion generator 950 may be disposed adjacent to the deodorizing filter 940. One surface of the ion generator 950 may face one surface of the deodorizing filter 940. With such a configuration, air that has passed through the deodorizing filter 940 may be sterilized by being ionized by the ion generator 950.

According to the concept of the present disclosure, the deodorizing filter 940 and the ion generator 950 may be disposed inside the cooling duct 900. A user of the refrigerator 1 may repair or replace the deodorizing filter 940 or the ion generator 950 by separating the cooling duct 900 or the cooling duct cover 920. That is, since the deodorizing filter 940 and the ion generator 950 are disposed inside the cooling duct 900, repair and replacement of the deodorizing filter 940 or the ion generator 950 may be facilitated.

The refrigerator 1 may include a printed circuit board assembly 951 configured to control the ion generator 950. When a voltage is applied to the ion generator 950 by the printed circuit board assembly 951, the ion generator 950 may ionize the surrounding air.

The printed circuit board assembly 951 may be coupled to the cooling duct 900. The printed circuit board assembly 951 may be disposed adjacent to the ion generator 950. The printed circuit board assembly 951 may be disposed on a front side (+X direction) of the ion generator 950.

The cooling duct 900 may include a printed circuit board accommodation space 951a for accommodating the printed circuit board assembly 951. The printed circuit board accommodation space 951a may be partitioned from the cooling space 990. The printed circuit board accommodation space 951a may be formed by the cooling duct body 910 and the cooling duct cover 920.

The cooling duct 900 may include a connecting hole 951b connecting the cooling space 990 and the printed circuit board accommodation space 951a. The connecting hole 951b may be provided to allow a wire electrically connecting the ion generator 950 and the printed circuit board assembly 951 to pass therethrough.

The cooling duct 900 may include a fixing portion 960 configured to fix the air purifying portion 930 and the light source 941. The fixing portion 960 may be connected to the cooling duct body 910. Specifically, the fixing portion 960 may be connected to a lower surface of the cooling duct body 910. The fixing portion 960 may fix the air purifying portion 930 to the cooling duct body 910. The fixing portion 960 may fix the light source 941 to the cooling duct body 910.

The fixing portion 960 may include a first fixing portion 961 configured to fix the deodorizing filter 940. The first fixing portion 961 may be connected to the cooling duct body 910 and may fix the deodorizing filter 940 to the cooling duct body 910. For example, the first fixing portion 961 may hold and fix both upper sides of the deodorizing filter 940. However, the method of fixing the deodorizing filter 940 by the first fixing portion 961 is not limited thereto.

The fixing portion 960 may include a second fixing portion 962 configured to fix the light source 941. The second fixing portion 962 may be connected to the cooling duct body 910 and may fix the light source 941 to the cooling duct body 910. For example, the second fixing portion 962 may hold and fix both upper sides of the light source 941. However, the method of fixing the light source 941 by the second fixing portion 962 is not limited thereto.

The fixing portion 960 may include a third fixing portion 963 configured to fix the ion generator 950. The third fixing portion 963 may be connected to the cooling duct body 910 and may fix the ion generator 950 to the cooling duct body 910. For example, the third fixing portion 963 may hold and fix both upper sides of the ion generator 950. However, the method of fixing the ion generator 950 by the third fixing portion 963 is not limited thereto.

The cooling duct 900 may include a support portion 970 configured to support the air purifying portion 930. The support portion 970 may be provided on an upper surface of the cooling duct cover 920 (see FIG. 8).

The support portion 970 may include a first support portion 971 configured to support the deodorizing filter 940. The first support portion 971 may be provided on an upper surface of the cooling duct cover 920 and may support a lower surface of the deodorizing filter 940 (see FIG. 8).

The support portion 970 may include a second support portion 972 configured to support the ion generator 950. The second support portion 972 may be provided on an upper surface of the cooling duct cover 920 and may support a lower surface of the ion generator 950 (see FIG. 8).

The cooling duct 900 may include a scroll portion 980 extending spirally along a circumferential direction of the cooling fan 800. The scroll portion 980 may be provided on the cooling duct body 910. Specifically, the scroll portion 980 may be formed along a boundary between the body base 910a and the recessed portion 910b of the cooling duct body 910. The scroll portion 980 may form a scroll portion opening 981 opened toward the cooling sink 570.

The scroll portion 980 may be configured to guide air discharged from the cooling fan 800 to the scroll portion opening 981. Specifically, the cooling fan 800 may be a centrifugal fan that draws air in an axial direction and discharges the air in radial directions, and the scroll portion 980 may guide air discharged toward the scroll portion 980 among the air drawn in by the cooling fan 800 to the scroll portion opening 981. That is, air discharged from the cooling fan 800 may be discharged toward the scroll portion opening 981, or may be discharged toward the scroll portion 980, and then guided by the scroll portion 980 to flow toward the scroll portion opening 981.

Due to the spiral shape of the scroll portion 980, air guided by the scroll portion 980 may receive centrifugal force. Accordingly, air guided by the scroll portion 980 and flowing to the scroll portion opening 981 may flow toward the cooling sink 570 in a state deflected toward a rear side (-X direction) of the cooling duct 900.

The air purifying portion 930 may be disposed to be spaced apart from one sidewall inside the cooling duct 900. Specifically, the air purifying portion 930 may be disposed to be spaced apart from a rear sidewall (-X direction) 900a inside the cooling duct 900. In this case, the rear sidewall 900a inside the cooling duct 900 may be a rear sidewall 900a of the cooling duct body 910. With such a configuration, a portion of the air flowing by the cooling fan 800 may pass between the air purifying portion 930 and the rear sidewall 900a. That is, a portion of the air flowing by the cooling fan 800 may pass between the air purifying portion 930 and the rear sidewall 900a, and another portion of the air flowing by the cooling fan 800 may pass through the air purifying portion 930.

For example, the deodorizing filter 940 may be disposed to be spaced apart from the rear sidewall 900a inside the cooling duct 900. With such a configuration, a portion of the air flowing by the cooling fan 800 may pass between the deodorizing filter 940 and the rear sidewall 900a.

The deodorizing filter 940 may extend in one direction D2 that intersects the flow direction D1 of air flowing by the cooling fan 800. In other words, the deodorizing filter 940 may extend in the front-rear direction (X-axis direction).

The deodorizing filter 940 may be disposed adjacent to a front sidewall (+X direction) 900b inside the cooling duct 900. In the drawing, the deodorizing filter 940 is shown as being spaced apart from the front sidewall 900b by a predetermined distance, but the disclosure is not limited thereto, and the deodorizing filter 940 may be in contact with the front sidewall 900b. The distance by which the deodorizing filter 940 is spaced apart from the rear sidewall 900a inside the cooling duct 900 in the direction D2 may be greater than the distance by which the deodorizing filter 940 is spaced apart from the front sidewall (+X direction) 900b inside the cooling duct 900 in the direction D2.

For example, the ion generator 950 may be disposed spaced apart from the rear sidewall 900a inside the cooling duct 900. With such a configuration, a portion of the air flowing by the cooling fan 800 may pass between the ion generator 950 and the rear sidewall 900a.

The ion generator 950 may extend in one direction D2 that intersects the flow direction D1 of air flowing by the cooling fan 800. In other words, the ion generator 950 may extend in the front-rear direction (X-axis direction). The ion generator 950 may extend parallel to the deodorizing filter 940.

The ion generator 950 may be disposed adjacent to the front sidewall (+X direction) 900b inside the cooling duct 900. In the drawing, the ion generator 950 is shown as being spaced apart from the front sidewall 900b by a predetermined distance, but the disclosure is not limited thereto, and the ion generator 950 may be in contact with the front sidewall 900b. The distance by which the ion generator 950 is spaced apart from the rear sidewall 900a inside the cooling duct 900 in the direction D2 may be greater than the distance by which the ion generator 950 is spaced apart from the front sidewall (+X direction) 900b inside the cooling duct 900 in the direction D2.

When the deodorizing filter 940 is a photocatalyst filter, the refrigerator 1 may include a light source 941, and the light source 941 may also be disposed to be spaced apart from the rear sidewall 900a inside the cooling duct 900. With such a configuration, a portion of the air flowing by the cooling fan 800 may pass between the light source 941 and the rear sidewall 900a.

The light source 941 may extend in one direction D2 that intersects the flow direction D1 of air flowing by the cooling fan 800. In other words, the light source 941 may extend in the front-rear direction (X-axis direction). The light source 941 may extend parallel to the deodorizing filter 940 and the ion generator 950.

The light source 941 may be disposed adjacent to the front sidewall (+X direction) 900b inside the cooling duct 900. In the drawing, the light source 941 is shown as being spaced apart from the front sidewall 900b by a predetermined distance, but the disclosure is not limited thereto, and the light source 941 may be in contact with the front sidewall 900b. The distance by which the light source 941 is spaced apart from the rear sidewall 900a inside the cooling duct 900 in the direction D2 may be greater than the distance by which the light source 941 is spaced apart from the front sidewall (+X direction) 900b inside the cooling duct 900 in the direction D2.

The deodorizing filter 940, the light source 941, and the ion generator 950 each extend in one direction D2 that intersects the flow direction D1 of air flowing by the cooling fan 800, and may act as resistance to the air flowing by the cooling fan 800. Accordingly, the air passing between the rear sidewall 900a and the front sidewall 900b inside the cooling duct 900 may have reduced average flow velocity, and the air may be deflected to flow between the deodorizing filter 940 and the rear sidewall 900a inside the cooling duct 900. In this case, the space between the deodorizing filter 940 and the rear sidewall 900a inside the cooling duct 900 may refer to the same space as between the light source 941 and the rear sidewall 900a inside the cooling duct 900, or between the ion generator 950 and the rear sidewall 900a inside the cooling duct 900.

In addition, the deodorizing filter 940, the light source 941, and the ion generator 950 may each be spaced apart from the rear sidewall 900a inside the cooling duct 900 and may be disposed adjacent to the front sidewall 900b. Accordingly, most of the air guided by the scroll portion 980 and flowing to the scroll portion opening 981 may pass between the deodorizing filter 940 and the rear sidewall 900a inside the cooling duct 900. In other words, the scroll portion 980 may guide air discharged toward the scroll portion 980 among the air drawn in by the cooling fan 800 such that the air flows between the rear sidewall 900a inside the cooling duct 900 and the deodorizing filter 940. With such a configuration, it is possible to minimize the reduction in flow velocity and flow rate of air passing between the rear sidewall 900a and the front sidewall 900b inside the cooling duct 900, and to cool air more effectively.

For example, the ratio of the flow rate of air flowing between the rear sidewall 900a inside the cooling duct 900 and the deodorizing filter 940 to the flow rate of air passing through the deodorizing filter 940 and the ion generator 950 may be approximately 9:1. For example, the flow rate of air flowing between the rear sidewall 900a inside the cooling duct 900 and the deodorizing filter 940 may be approximately 0.27 cubic meter per minute (CMM), and the flow rate of air passing through the deodorizing filter 940 and the ion generator 950 may be approximately 0.03 CMM. However, the flow rate of air is not limited thereto.

According to the concept of the present disclosure, the refrigerator 1 may remove odors from air inside the first storage compartment 11 or sterilize the air using the thermoelectric cooling device 400 configured to cool the first storage compartment 11. Specifically, the refrigerator 1 may remove odors from the air inside the first storage compartment 11 or sterilize the air using the cooling fan 800 provided inside the cooling duct 900 of the thermoelectric cooling device 400. That is, there is no need to provide a separate space for installing an additional fan, and accordingly, the first storage compartment 11 may have a relatively large capacity.

According to the concept of the present disclosure, the components of the air purifying portion 930 and the arrangement relationship among the components thereof may vary. For example, at least one of the deodorizing filter 940 or the ion generator 950 may be omitted, and even when both are included, their arrangement relationship may vary. Hereinafter, components of the air purifying portion 930 and arrangement relationships among the components thereof according to various embodiments of the present disclosure will be described.

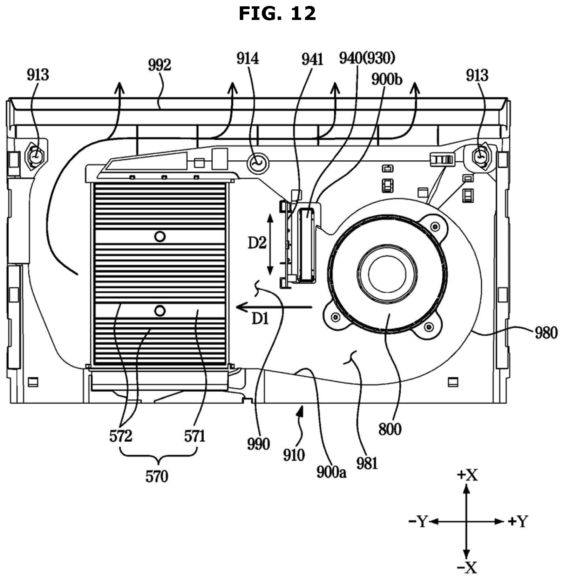

FIG. 12 is a plan view illustrating a bottom surface of a cooling duct body according to an embodiment.

Referring to FIG. 12, the air purifying portion 930 of the refrigerator 1 according to an embodiment will be described. In describing the refrigerator 1 shown in FIG. 12, components that are substantially identical to those of the refrigerator 1 shown in FIGS. 1 to 11 are assigned the same reference numerals, and detailed descriptions thereof may be omitted.

Referring to FIG. 12, the air purifying portion 930 may include a deodorizing filter 940 and a light source 941. The deodorizing filter 940 and the light source 941 may each be disposed spaced apart from the rear sidewall 900a inside the cooling duct 900 and adjacent to the front sidewall 900b. The light source 941 may be disposed downstream of the deodorizing filter 940 with respect to the flow direction D1 of air flowing by the cooling fan 800. In this case, the ion generator 950, the third fixing portion 963, and the second support portion 972 may be omitted.

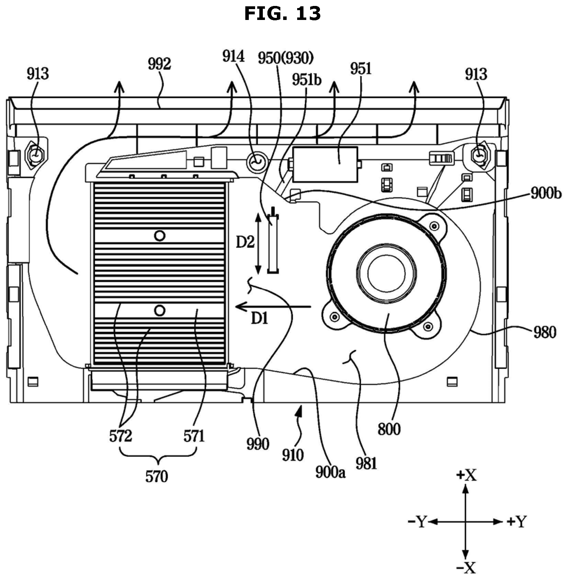

FIG. 13 is a plan view illustrating a bottom surface of a cooling duct body according to an embodiment.

Referring to FIG. 13, the air purifying portion 930 of the refrigerator 1 according to an embodiment will be described. In describing the refrigerator 1 shown in FIG. 13, components that are substantially identical to those of the refrigerator 1 shown in FIGS. 1 to 11 are assigned the same reference numerals, and detailed descriptions thereof may be omitted.

Referring to FIG. 13, the air purifying portion 930 may include an ion generator 950. The ion generator 950 may be disposed spaced apart from the rear sidewall 900a inside the cooling duct 900 and adjacent to the front sidewall 900b. In this case, the deodorizing filter 940, the light source 941, the first fixing portion 961, the second fixing portion 962, and the first support portion 971 may be omitted.

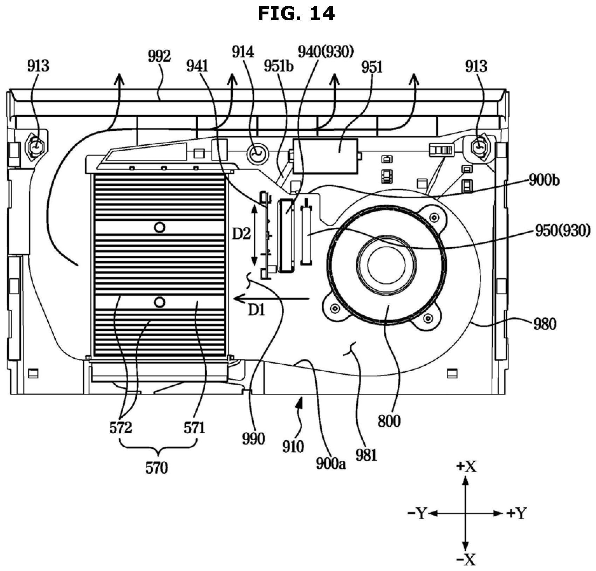

FIG. 14 is a plan view illustrating a bottom surface of a cooling duct body according to an embodiment.

Referring to FIG. 14, the air purifying portion 930 of the refrigerator 1 according to an embodiment will be described. In describing the refrigerator 1 shown in FIG. 14, components that are substantially identical to those of the refrigerator 1 shown in FIGS. 1 to 11 are assigned the same reference numerals, and detailed descriptions thereof may be omitted.

Referring to FIG. 14, the air purifying portion 930 may include a deodorizing filter 940, a light source 941, and an ion generator 950. The deodorizing filter 940, the light source 941, and the ion generator 950 may each be disposed to be spaced apart from the rear sidewall 900a inside the cooling duct 900 and adjacent to the front sidewall 900b. The light source 941 may be disposed downstream of the deodorizing filter 940 with respect to the flow direction D1 of air flowing by the cooling fan 800. The ion generator 950 may be disposed upstream of the deodorizing filter 940 with respect to the flow direction D1 of air flowing by the cooling fan 800. That is, the deodorizing filter 940 may be disposed between the light source 941 and the ion generator 950.

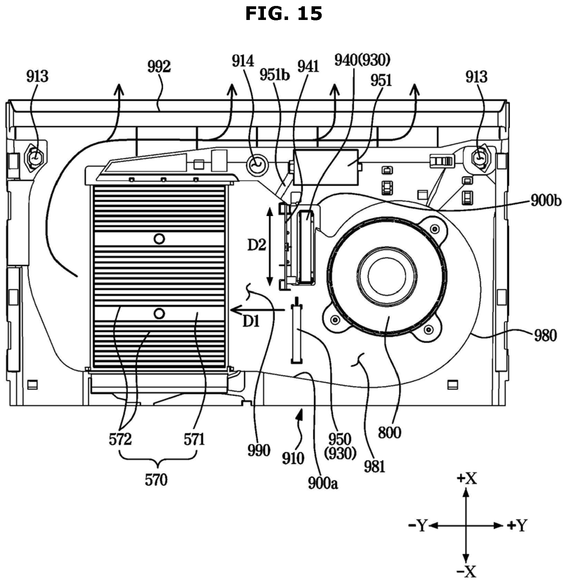

FIG. 15 is a plan view illustrating a bottom surface of a cooling duct body according to an embodiment.

Referring to FIG. 15, the air purifying portion 930 of the refrigerator 1 according to an embodiment will be described. In describing the refrigerator 1 shown in FIG. 15, components that are substantially identical to those of the refrigerator 1 shown in FIGS. 1 to 11 are assigned the same reference numerals, and detailed descriptions thereof may be omitted.

Referring to FIG. 15, the air purifying portion 930 may include a deodorizing filter 940, a light source 941, and an ion generator 950. The deodorizing filter 940 and the ion generator 950 may be arranged in one direction D2 that intersects the flow direction D1 of air flowing by the cooling fan 800. In other words, the deodorizing filter 940 and the ion generator 950 may be arranged in the front-rear direction (X-axis direction). In the drawing, the deodorizing filter 940 is shown as being disposed in front of the ion generator 950, but the disclosure is not limited thereto, and the deodorizing filter 940 may be disposed behind the ion generator 950. The light source 941 may be disposed downstream of the deodorizing filter 940 with respect to the flow direction D1 of air flowing by the cooling fan 800.

According to one embodiment, the refrigerator 1 comprises a main body 100 having a storage compartment 11 formed therein, a thermoelectric element 530 provided on an upper wall 110 of the main body 100 and including a heat-generating portion 531 and a cooling portion 532, a cooling sink 570 in contact with the cooling portion 532, a cooling fan 800 configured to draw in air inside the storage compartment 11 and blow the air toward the cooling sink 570, a cooling duct 900 configured to guide air flowing by the cooling fan 800, and an air purifying portion 930 provided inside the cooling duct 900 and disposed between the cooling sink 570 and the cooling fan 800.

The air purifying portion 930 may include a deodorizing filter 940 configured to remove odors from the air flowing by the cooling fan 800.

The deodorizing filter 940 may be configured to remove odors from the air flowing by the cooling fan 800 through a photochemical reaction. The refrigerator 1 may further include a light source 941 configured to irradiate light onto the deodorizing filter 940.

The light source 941 may be disposed downstream of the deodorizing filter 940 with respect to a flow direction D1 of the air flowing by the cooling fan 800.

The air purifying portion 930 may include an ion generator 950 configured to ionize the air flowing by the cooling fan 800.

The refrigerator 1 may further include a printed circuit board assembly 951 configured to control the ion generator 950 and coupled to the cooling duct 900.

The air purifying portion 930 may further include an ion generator 950 configured to ionize the air flowing by the cooling fan 800. The ion generator 950 may be disposed downstream of the deodorizing filter 940 with respect to a flow direction D1 of the air flowing by the cooling fan 800.

The air purifying portion 930 may further include an ion generator 950 configured to ionize the air flowing by the cooling fan 800 to sterilize the air. The light source 941 may be disposed between the deodorizing filter 940 and the ion generator 950.

The deodorizing filter 940 may be spaced apart from one sidewall 900a inside the cooling duct 900 so that a portion of the air flowing by the cooling fan 800 passes between the one sidewall 900a inside the cooling duct 900 and the deodorizing filter 940.

The deodorizing filter 940 may extend in one direction D2 intersecting a flow direction D1 of the air flowing from the cooling fan 800 to the cooling sink 570. A distance by which the deodorizing filter 940 is spaced apart from the one sidewall 900a inside the cooling duct 900 in the one direction D2 may be greater than a distance by which the deodorizing filter 940 is spaced apart from another sidewall 900b inside the cooling duct 900 in the one direction D2.

The cooling duct 900 may include a scroll portion 980 extending spirally along a circumferential direction of the cooling fan 800. The cooling fan 800 may be a centrifugal fan that draws air in an axial direction and discharges the air in radial directions. The scroll portion 980 may be configured to guide air discharged in a direction toward the scroll portion 980 among the air drawn in by the cooling fan 800 to flow between the one sidewall 900a inside the cooling duct 900 and the deodorizing filter 940.

The cooling duct 900 may include a cooling duct body 910 coupled to the upper wall 110 of the main body 100, a cooling duct cover 920 covering an open lower surface of the cooling duct body 910, and a fixing portion 961 connected to the cooling duct body 910 and configured to fix the deodorizing filter 940 to the cooling duct body 910.

The cooling duct 900 may further include a deodorizing filter accommodating portion 940a protruding from an upper surface of the cooling duct body 910 to accommodate at least a part of the deodorizing filter 940.

The air purifying portion 930 may further include an ion generator 950 configured to ionize the air flowing by the cooling fan 800. The ion generator 950 may be disposed upstream of the deodorizing filter 940 with respect to a flow direction D1 of the air flowing by the cooling fan 800.

The air purifying portion 930 may further include an ion generator 950 configured to ionize the air introduced by the cooling fan 800 to sterilize the air. The deodorizing filter 940 and the ion generator 950 may be arranged in one direction D2 intersecting a flow direction D1 of the air flowing from the cooling fan 800 to the cooling sink 570.

According to one embodiment, the refrigerator 1 comprises a main body 100 having a storage compartment 11 formed therein, a cooling sink 570 provided inside the storage compartment 11, a cooling fan 800 configured to blow air toward the cooling sink 570, a cooling duct 900 configured to guide air flowing by the cooling fan 800, a deodorizing filter 940 disposed between the cooling sink 570 and the cooling fan 800, and an ion generator 950 configured to ionize the air flowing by the cooling fan 800 and disposed downstream of the deodorizing filter 940 with respect to a flow direction D1 of the air flowing by the cooling fan 800.

The deodorizing filter 940 may be configured to remove odors from the air passing through the deodorizing filter 940 through a photochemical reaction. The refrigerator 1 may further include a light source 941 configured to irradiate light onto the deodorizing filter 940.

The deodorizing filter 940, the light source 941, and the ion generator 950 may be arranged sequentially along a flow direction D1 of the air flowing by the cooling fan 800.

The refrigerator 1 may further include a printed circuit board assembly 951 configured to control the ion generator 950 and coupled to the cooling duct 900.

The cooling duct 900 may include a connection hole 951b configured to allow a wire electrically connecting the ion generator 950 and the printed circuit board assembly 951 to pass therethrough.

According to an aspect of the present disclosure, a deodorizing filter of a refrigerator may be disposed between a cooling fan and a cooling sink to perform a deodorizing function for air inside the refrigerator.

According to an aspect of the present disclosure, an ion generator of a refrigerator may be disposed between a cooling fan and a cooling sink to ionize air inside the refrigerator, thereby performing a sterilization function for the air inside the refrigerator.

According to an aspect of the present disclosure, since a deodorizing filter or an ion generator of a refrigerator is disposed between a cooling fan and a cooling sink, the cooling fan alone may perform not only a cooling function for air inside the refrigerator but also a deodorizing function or a sterilization function. That is, since a separate fan for performing the deodorizing function or the sterilization function is needed, the refrigerator may have a relatively large storage compartment capacity.

The effects of the present disclosure are not limited to those described above, and other effects that are not described above will be clearly understood by those skilled in the art from the above detailed description and drawings.

While the present disclosure has been particularly described with reference to exemplary embodiments, it should be understood by those of skilled in the art that various changes in form and details may be made without departing from the spirit and scope of the present disclosure.

## Claims

1. A refrigerator comprising:
a main body having a storage compartment provided therein;
a thermoelectric element provided on an upper wall of the main body and including a heat-generating portion and a cooling portion;
a cooling sink in contact with the cooling portion;
a cooling fan configured to draw in air inside the storage compartment and blow the air toward the cooling sink;
a cooling duct configured to guide air flowing by the cooling fan; and
an air purifying portion provided inside the cooling duct and disposed between the cooling sink and the cooling fan.

2. The refrigerator of claim 1, wherein the air purifying portion includes a deodorizing filter configured to remove odors from the air flowing by the cooling fan.

3. The refrigerator of claim 2, wherein the deodorizing filter is configured to remove odors from the air flowing by the cooling fan through a photochemical reaction, and the refrigerator further includes a light source configured to irradiate light onto the deodorizing filter.

4. The refrigerator of claim 3, wherein the light source is disposed downstream of the deodorizing filter with respect to a flow direction of the air flowing by the cooling fan.

5. The refrigerator of claim 1, wherein the air purifying portion includes an ion generator configured to ionize the air flowing by the cooling fan.

6. The refrigerator of claim 5, further comprising a printed circuit board assembly configured to control the ion generator, the printed circuit board assembly being coupled to the cooling duct.

7. The refrigerator of claim 2, wherein the air purifying portion further includes an ion generator configured to ionize the air flowing by the cooling fan, and the ion generator is disposed downstream of the deodorizing filter with respect to a flow direction of the air flowing by the cooling fan.

8. The refrigerator of claim 4, wherein the air purifying portion further includes an ion generator configured to ionize the air flowing by the cooling fan to sterilize the air, and the light source is disposed between the deodorizing filter and the ion generator.

9. The refrigerator of claim 2, wherein the deodorizing filter is spaced apart from one sidewall inside the cooling duct so that a portion of the air flowing by the cooling fan passes between the one sidewall inside the cooling duct and the deodorizing filter.

10. The refrigerator of claim 9, wherein the deodorizing filter extends in one direction intersecting a flow direction of the air flowing by the cooling fan, and a distance by which the deodorizing filter is spaced apart from the one sidewall inside the cooling duct in the one direction is greater than a distance by which the deodorizing filter is spaced apart from another sidewall inside the cooling duct in the one direction.

11. The refrigerator of claim 10, wherein the cooling duct includes a scroll portion extending spirally along a circumferential direction of the cooling fan,
the cooling fan is a centrifugal fan that draws air in an axial direction and discharges the air in a radial direction, and
the scroll portion is configured to guide air discharged in a direction toward the scroll portion among the air drawn in by the cooling fan to flow between the one sidewall inside the cooling duct and the deodorizing filter.

12. The refrigerator of claim 2, wherein the cooling duct includes:
a cooling duct body coupled to the upper wall of the main body;
a cooling duct cover covering an open lower surface of the cooling duct body; and
a fixing portion connected to the cooling duct body and configured to fix the deodorizing filter to the cooling duct body.

13. The refrigerator of claim 12, wherein the cooling duct further includes a deodorizing filter accommodating portion protruding from an upper surface of the cooling duct body to accommodate at least a part of the deodorizing filter.

14. The refrigerator of claim 2, wherein the air purifying portion further includes an ion generator configured to ionize the air flowing by the cooling fan, and
the ion generator is disposed upstream of the deodorizing filter with respect to a flow direction of the air flowing by the cooling fan.

15. The refrigerator of claim 2, wherein the air purifying portion further includes an ion generator configured to ionize air introduced by the cooling fan, and the deodorizing filter and the ion generator are arranged in one direction intersecting a flow direction of the air flowing by the cooling fan.
